# EUROPÄISCHE PATENTSCHRIFT

(11) **EP 0 919 427 B1**
(45) Veröffentlichungstag und Bekanntmachung des Hinweises auf die Patenterteilung: **03.12.2003**
(21) Anmeldenummer: 98120558.6
(22) Anmeldetag: 30.10.1998
(51) Int. Cl.: B60N 2/28

(54) **Kindersitz für Fahrzeuge**
Children's seat for vehicles
Siège d'enfants pour véhicules

(30) Priorität: 27.11.1997 DE 19752536
(43) Veröffentlichungstag der Anmeldung: 02.06.1999
(73) Patentinhaber: DaimlerChrysler AG, 70567 Stuttgart (DE)
(72) Erfinder: Weber, Norbert, 71149 Bondorf (DE)

(56) Entgegenhaltungen:
- EP-A- 0 278 385
- EP-A- 0 466 429
- EP-A- 0 650 881
- US-A- 4 911 498

## Beschreibung

Die Erfindung betrifft einen Kindersitz für Fahrzeuge, insbesondere für Personenkraftwagen, der im Oberbegriff des Patentanspruchs 1 angegebenen Gattung.

Bei einem bekannten Kindersitz dieser Art (DE 37 03 742 C2) überspannt ein Sicherungsbügel die Sitzschale im Beinbereich der das Kind aufnehmenden Sitzschale und hält das Kind im Crashfall in der Sitzschale zurück. Dieser Sicherungsbügel kann zusätzlich so geformt sein, daß dem Kind eine Tischfläche zum Spielen und Abstellen von Spielzeug geboten wird. Im Kopfbereich der Sitzschale sind in den beiden Seitenteilen Wangenstützen herausgearbeitet, die den Kopf des Kindes gegen extreme seitliche Verlagerung schützen.

Der Erfindung liegt die Aufgabe zugrunde, einen Kindersitz der eingangs genannten Art so verbessern, daß neue Funktionsbereiche für das Kind erschlossen werden.

Die Aufgabe ist bei einem Kindersitz der im Oberbegriff des Patentanspruchs 1 angegebenen Gattung erfindungsgemäß durch die Merkmale im Kennzeichenteil des Patentanspruchs 1 gelöst.

Der erfindungsgemäße Kindersitz hat den Vorteil eines hochflexiblen Systems, das den Kindersitz zu einem "Erlebnissitz" für das Kind werden läßt. Der konstruktive Aufwand ist relativ gering und umfaßt die Sitzschale als "Grundträger", die Formteile sowie die Mechanik für das Arretieren auf den Fahrzeugschienen und die Gelenke für die verschiedenen Bewegungen der Formteile. Der erfindungsgemäße Kindersitz kann als reiner Sicherheitssitz, bei dem der Kopf des Kindes durch Wangen abgestützt wird, und als Spiel- oder Beschäftigungssitz in verschiedenen Variationen genutzt werden, wobei die Formteile unmittelbar als Tischfläche oder als Grundträger für zusätzliche Anbauteile verschiedenster Art, z.B. eines Spieltisches, fungieren.

Vorteilhafte Ausführungsformen des erfindungsgemäßen Kindersitzes mit zweckmäßigen Ausgestaltungen der Erfindung ergeben sich aus den weiteren Ansprüchen.

Die Erfindung ist anhand eines in der Zeichnung dargestellten Ausführungsbeispiels im folgenden näher beschrieben. Es zeigen jeweils in perspektivischer Darstellung:
- Fig. 1: einen Kindersitz für einen Personenkraftwagen mit allen Verwandlungsvarianten,
- Fig. 2 bis 5: jeweils den Kindersitz gemäß Fig. 1 mit einsitzendem Kind in vier möglichen Verwandlungsvarianten.

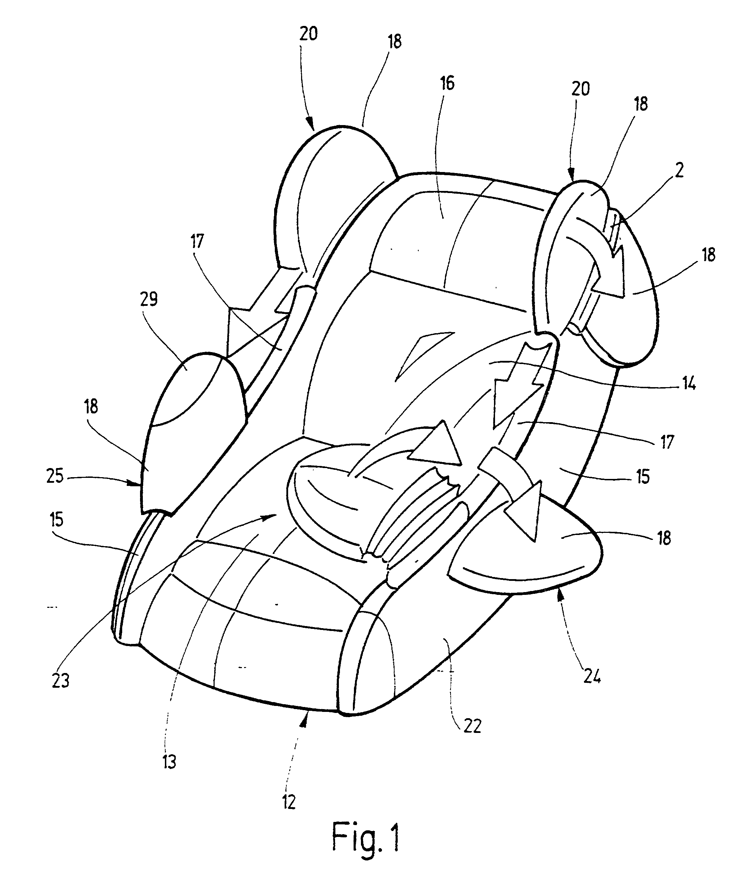

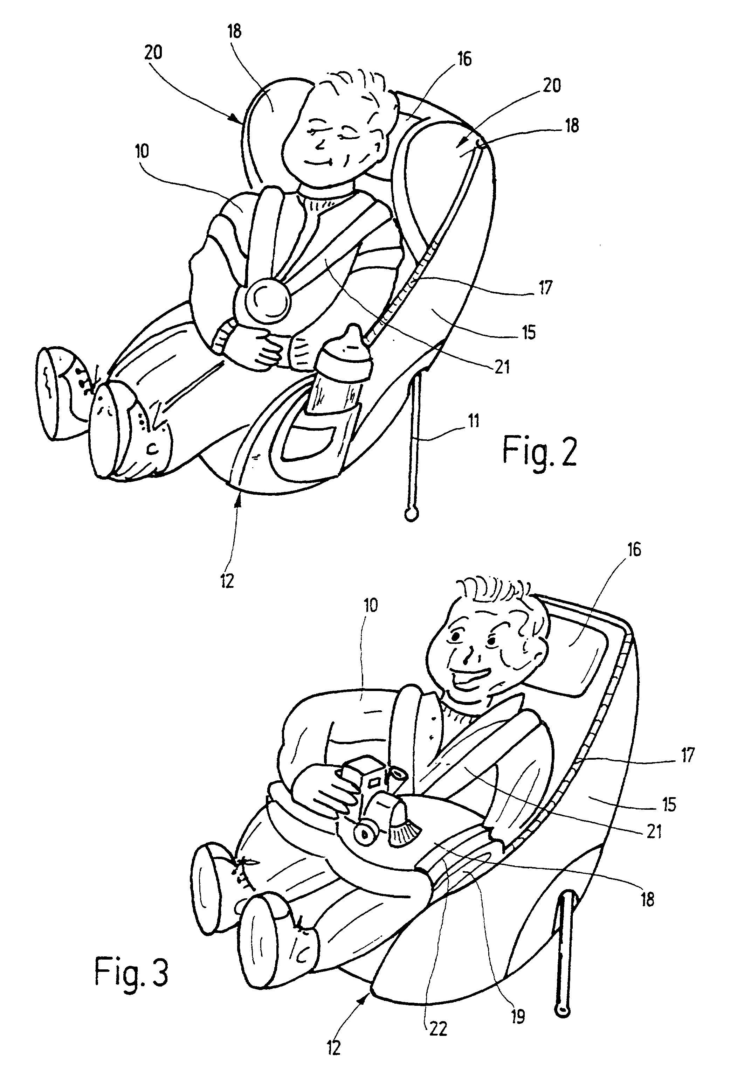

Der in Fig. 1 perspektivisch dargestellte Kindersitz für einen Personenkraftwagen wird auf der Rücksitz- oder Fondbank eines Personenkraftwagens befestigt und weist hierzu zwei seitlich angeordneten Befestigungsstangen 11 auf (Fig. 2 - 5), die zwischen Sitzpolster und Lehnenpolster der Rücksitzbank hindurchgesteckt und mit entsprechenden Verriegelungseinrichtungen am Fahrzeugrahmen oder an der Fahrzeugkarosserie verriegelt werden. Der Kindersitz weist eine Sitzschale 12 mit einer Sitzfläche 13, einer Rückenstütze 14 und zwei diese seitlich begrenzenden Seitenteilen 15 auf, die über Sitzfläche 13 und Rückenstütze 14 vorstehen. Die Sitzschale 12 ist innen ausgepolstert, wobei am oberen Ende der Rückenstütze 14 ein Kopfpolster 16 ausgeformt ist.

Auf der Oberkante der beiden Seitenteile 15 verläuft jeweils eine Führungsschiene 17 in der ein Formteil 18 mit einem Führungsfuß 19 verschieblich aufgenommen ist. Die beiden Formteile 18 sind so ausgebildet, daß sie in einer im Kopfbereich liegenden Verschiebeposition Stützwangen 20 zum Anlegen des Kopfes des in der Sitzschale 12 plazierten Kindes bilden (Fig. 2). Das in Fig. 2 - 5 mit 10 bezeichnete Kind ist im übrigen mittels eines Hosenträgergurts 21 in der Sitzschale 12 gesichert. Zwischen dem Führungsfuß 19 und dem Formteil 18 ist eine Schwenkverbindung 22 vorgesehen, die eine Schwenkung des Formteils 18 in einer quer zur Führungsschiene 17 verlaufenden Schwenkrichtung relativ zum Schwenkfuß 19 ermöglicht. Durch diese Schwenkverbindungen 22 können z.B. die beiden Formteile 18 in ihrer im Kopfbereich liegenden Verschiebeposition nach außen abgeschwenkt werden, wenn die von den Formteilen 18 gebildeten Stützwangen 20 von dem Kind als störend empfunden werden (vgl. Fig. 1). Die Schwenkverbindung 22 zwischen Formteil 18 und Führungsfuß 19 kann in bestimmten Schwenkstellungen arretiert werden, so daß eine ungewollte Veränderung der Schwenkstellung verhindert wird. In der Stützwangenfunktion der Formteile 18 (Fig. 2) ist die Schwenkverbindung 22 in einer 0°-Stellung verriegelt, so daß die Stützwangen 20 nicht von dem Kind 10 nach außen gedrückt werden können. Die Arretierung der Schwenkverbindung 22 kann auf verschiedene Arten bewirkt werden und ist hier der Übersichtlichkeit halber nicht dargestellt. An den Führungsfüßen 19 sind hier nicht dargestellte Verrastungsmittel angeordnet, mittels welcher der Führungsfuß 19 in verschiedenen Verschiebepositionen in der Führungsschiene 17 festgelegt werden kann. Diese Verrastungsmittel sind ebenso wie die Arretierungsmittel manuell zu bedienen, d.h. manuell zu lösen und/oder zu aktivieren.

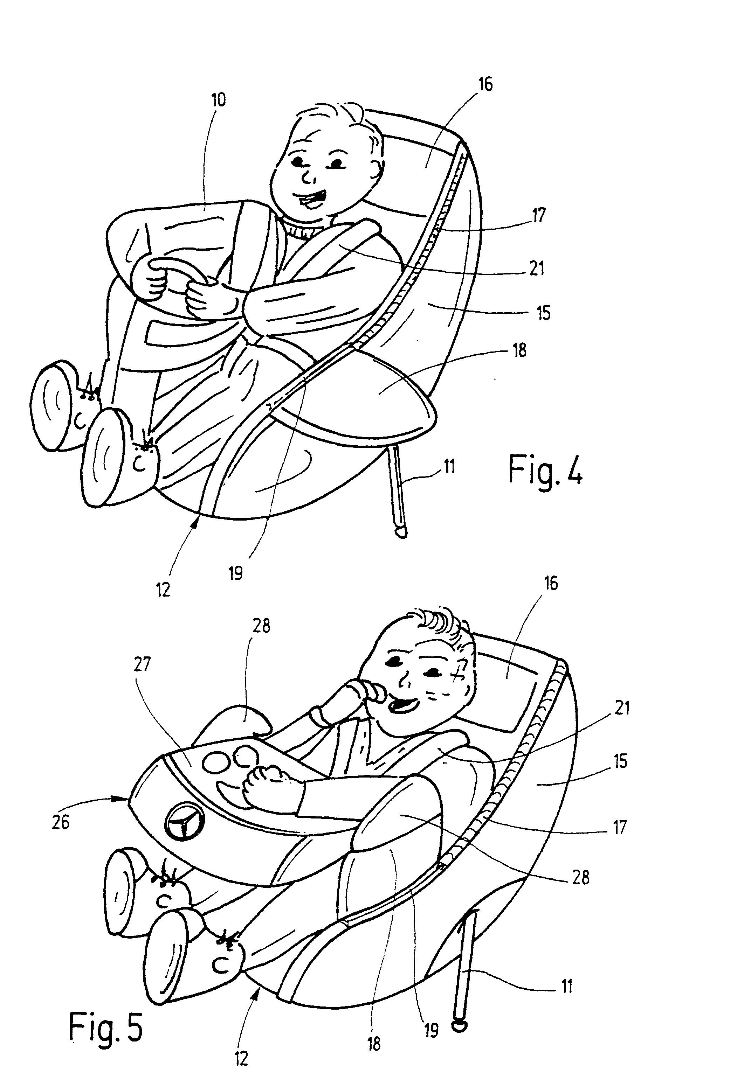

Nach Lösen der Führungsfußverrastungen können die beiden Formteile 18 in den Führungsschienen 17 verschoben werden und in einer im Beinbereich liegenden Verschiebeposition wieder arretiert werden. Diese Verschiebeposition der Formteile 18 im Beinbereich ist in Fig. 3 - 5 dargestellt und auch in Fig. 1 zusätzlich eingezeichnet. Durch die Schwenkverbindungen 22 zwischen jedem Formteil 18 und Führungsfuß 19 können die beiden Formteile 18 in dieser Verschiebeposition um 90° ins Innere der Sitzschale 12 geschwenkt werden, wo die beiden Formteile 18 einen quer über den Beinbereich sich erstreckenden Tisch 23 bilden (Fig. 3). Dieser Tisch 23 kann als Spielfläche oder als Abstellfläche für Spielzeug von dem Kind 10 genutzt werden. Durch die Schwenkverbindung 22 können die beiden Formteile 18 auch um 90° nach außen geschwenkt und hier nach Verrastung als Ablagetischchen 24 genutzt werden (Fig. 4).

Die Formteile 18 können in ihrer im Beinbereich arretierten Verschiebeposition als zwei seitlich emporstehende Grundträger 25 für Anbauteile 26 genutzt werden, die Spiel- und Ablenkmöglichkeiten für das Kind 10 bieten und zwischen den Grundträgern 25 eingehängt werden. Als Anbauteile 26 können beispielsweise eine Tischplatte, eine Rassel, eine Spieluhr, Geschicklichkeitsspiele od.dgl., vorgesehen werden. Im Ausführungsbeispiel der Fig. 5 ist das Anbauteil ein Spieltisch 27, der mit zwei Aufhängeohren 28 in Steckaufnahmen der beiden Formteile 18 eingesteckt ist, die in den von den Führungsfüßen 19 abgekehrten Oberkanten der beiden Formteile 18 vorhanden sind. Zum Freilegen der Einsteckaufnahmen ist - wie dies in Fig. 1 angedeutet ist - eine obere Abdeckkappe 29 vom Formteil 18 abzunehmen. Diese Abdeckkappe 29 ist in ihrem Anbauzustand in die Außenkontur des Formteils 18 integriert und bildet einen Teil des Formteils 18.

## Patentansprüche

1. Kindersitz für Fahrzeuge, insbesondere für Personenkraftwagen, mit einer Sitzschale (12), die eine Sitzfläche (13), eine Rückenstütze (14) und zwei diese seitlich begrenzende, vorzugsweise über Sitzfläche (13) und Rückenstütze (14) vorstehende Seitenteile (15) aufweist,
**dadurch gekennzeichnet,**
**daß** auf der Oberkante der Seitenteile (15) jeweils eine Führungsschiene (17) verläuft, daß in jeder Führungsschiene (17) ein auf dem Seitenteil (15) aufragendes Formteil (18) mit einem Führungsfuß (19) verschieblich aufgenommen ist, daß die Formteile (18) so ausgebildet sind, daß sie in einer im Kopfbereich der Sitzschale liegenden Verschiebeposition Stützwangen (20) zu bilden vermögen, und daß die Führungsfüße zumindest in der im Kopfbereich liegenden Verschiebeposition und einer im Beinbereich liegenden Verschiebeposition arretierbar sind.

2. Kindersitz nach Anspruch 1,
**dadurch gekennzeichnet,**
**daß** die Formteile (18) zusätzlich so ausgebildet sind, daß sie in ihrer im Beinbereich arretierten Verschiebeposition eine Ablagefläche (13) bilden oder eine solche Ablagefläche (27) aufzunehmen vermögen.

3. Kindersitz nach Anspruch 2,
**dadurch gekennzeichnet,**
**daß** an den Formteilen (18) Befestigungsmittel derart vorgesehen sind, daß die Formteile (18) in ihrer im Beinbereich arretierten Verschiebeposition seitlich emporstehende Grundträger (25) für zwischen die Grundträger einzuhängende Einbauteile (26), wie Spieltisch (27), Beschäftigungs- und Ablenkspiele u.dgl., bilden.

4. Kindersitz nach Anspruch 2 oder 3,
**dadurch gekennzeichnet,**
**daß** zwischen jedem Formteil (18) und Führungsfuß (19) eine Schwenkverbindung (22) mit quer zur Verschieberichtung der Führungsfüße (19) verlaufender Schwenkrichtung vorgesehen ist und daß das Formteil (18) mindestens in jeder 90°-Schwenkstellung feststellbar ist.

5. Kindersitz nach Anspruch 4,
**dadurch gekennzeichnet,**
**daß** die Formteile (18) so ausgebildet sind, daß sie in ihrer im Beinbereich arretierten Verschiebeposition durch Schwenken um 90° ins Innere der Sitzschale (12) gemeinsam einen den Beinbereich der Sitzschale (12) quer überdeckenden Tisch (23) bilden.

6. Kindersitz nach Anspruch 4 oder 5,
**dadurch gekennzeichnet,**
**daß** die Formteile (18) so ausgebildet sind, daß sie in ihrer im Beinbereich arretierten Verschiebeposition durch Schwenken um 90° nach außen jeweils ein an der Sitzschale (12) außen liegendes Ablagetischchen (24) bilden.

7. Kindersitz nach einem der Ansprüche 1 - 6,
**gekennzeichnet durch**
ein in der Sitzschale (12) verankerten Hosenträgergurt (21) zum Sichern des Kindes (10) in der Sitzschale (12).

## Claims

1. A child seat for vehicles, in particular for passenger cars, having a seat shell (12) which comprises a seat surface (13), a back support (14) and two lateral parts (15) laterally adjoining the back support (14) which preferably project beyond the seat surface (13) and the back support (14),
**characterised in that**
guide rails (17) run along the upper edge of the lateral parts (15), received in each of the guide rails (17) in such a manner that it is able to move is a preform (18) with a guide foot (19) which extends to the lateral part (15), the preforms (18) are designed such that in a position located in the head area of the seat shell they form support cheeks (20) and the guide feet can be locked at least in a position located in the head area and in a position located in the leg area.

2. A child seat in accordance with claim 1,
**characterised in that**
the preforms (18) are also designed such that when locked in the leg area they form or are able to receive a tray surface (27).

3. A child seat in accordance with claim 2,
**characterised in that**
fixing means are provided on the preforms (18) in such a manner that in the position in which they are locked in the leg area the preforms (18) form laterally projecting base supports (25) for add-on components (26) to be suspended between the base supports such as a play table (27) or activity and distraction toys.

4. A child seat in accordance with claim 2 or 3,
**characterised in that**
between each preform (18) and guide foot (19) is provided a hinged connection (22) with a direction of pivoting at right angles to the direction of movement of the guide feet (19) and the preform (18) can be fixed at least every 90°.

5. A child seat in accordance with claim 4,
**characterised in that**
the preforms (18) are designed such that when locked in position in the leg area they can both be pivoted into the seat shell (12) by 90° in order to form a table (23) which covers the leg area of the seat shell (12) at right angles.

6. A child seat in accordance with claim 4 or 5,
**characterised in that**
the preforms (18) are designed such that when locked in position in the leg area they can be pivoted outwards by 90° in order to form trays (24) outside the seat shell (12).

7. A child seat in accordance with claim 1 to 6,
**characterised by**
a harness belt (21 ) anchored in the seat shell (12) by which to secure the child (10) in the seat shell (12).

## Revendications

1. Siège d'enfant pour véhicule automobile, en particulier pour véhicule de tourisme, comportant une coque de siège (12) présentant une surface d'assise (13), un appui pour le dos (14) et deux parties latérales (15) délimitant celles-ci, de préférence dépassant de la surface d'assise (13) et de l'appui pour le dos (14), **caractérisé en ce que** sur l'arête supérieure des parties latérales (15) s'étend chaque fois un rail de guidage (17), **en ce que** dans chaque rail de guidage (17) une pièce moulée (18) saillant de la partie latérale (15) est reprise, pouvant coulisser avec un pied de guidage (19), **en ce que** les pièces moulées (18) sont constituées de telle manière qu'elles peuvent former des joues d'appui (20) dans une position de coulissement se trouvant dans la zone de tête de la coque de siège et **en ce que** les pieds de guidage peuvent être arrêtés au moins dans la position de coulissement se trouvant dans la zone de tête et dans une position de coulissement se trouvant dans la zone des jambes.

2. Siège d'enfant selon la revendication 1, **caractérisé en ce que** les pièces moulées (18) sont constituées en outre de telle manière que dans leur position de coulissement arrêtée dans la zone des jambes, elles forment une surface réceptrice (13) ou peuvent recevoir une telle surface réceptrice (27).

3. Siège d'enfant selon la revendication 2, **caractérisé en ce que** des moyens de fixation sont prévus sur les pièces moulées (18) de telle manière que les pièces moulées (18) dans leur position de coulissement arrêtée dans la zone des jambes forment des supports de base (25) dressés pour des pièces (26) à accrocher entre les supports de base, telles une table de jeu (27), des jeux d'éveil et dérivatifs et semblables.

4. Siège d'enfant selon la revendication 2 ou 3, **caractérisé en ce qu'**entre chaque pièce moulée (18) et pied de guidage (19) est prévue une liaison pivotante (22) de sens de rotation transversal au sens de coulissement des pieds de guidage (19) et **en ce que** la pièce moulée (18) peut être immobilisée au moins dans chaque position de rotation à 90 °.

5. Siège d'enfant selon la revendication 4, **caractérisé en ce que** les pièces moulées (18) sont constituées de telle manière que, dans leur position de coulissement arrêtée dans la zone des jambes, par rotation de 90 ° à l'intérieur de la coque de siège (12), elles forment une table (23) recouvrant transversalement la zone des jambes de la coque de siège (12).

6. Siège d'enfant selon la revendication 4 ou 5, **caractérisé en ce que** les pièces moulées (18) sont constituées de telle manière que, dans leur position de coulissement arrêtée dans la zone des jambes, par rotation de 90 ° vers l'extérieur, elles forment chaque fois une tablette réceptrice (24) se trouvant à l'extérieur contre la coque de siège (12).

7. Siège d'enfant selon l'une quelconque des revendications 1 à 6, **caractérisé par** une ceinture en bretelle (21) ancrée dans la coque de siège (12) pour garantir la sécurité de l'enfant (10) dans la coque de siège (12).
